# EUROPÄISCHE PATENTSCHRIFT

(11) **EP 2 652 364 B1**
(45) Veröffentlichungstag und Bekanntmachung des Hinweises auf die Patenterteilung: **18.03.2015**
(21) Anmeldenummer: 11782577.8
(22) Anmeldetag: 08.11.2011
(51) Int. Cl.: F16H 61/12, F16H 61/686

(54) **VERFAHREN ZUM BETREIBEN EINER GETRIEBEVORRICHTUNG EINES FAHRZEUGANTRIEBSSTRANGES BEI VORLIEGEN EINER ANFORDERUNG FÜR EINEN ÜBERSETZUNGSWECHSEL**
METHOD FOR THE OPERATION OF A TRANSMISSION DEVICE IN A VEHICLE DRIVE TRAIN WHEN A REQUEST IS MADE TO CHANGE GEARS
PROCÉDÉ PERMETTANT DE FAIRE FONCTIONNER UN DISPOSITIF DE TRANSMISSION DE LA CHAÎNE CINÉMATIQUE D'UN VÉHICULE LORS D'UNE DEMANDE DE CHANGEMENT DE RAPPORT

(30) Priorität: 14.12.2010 DE 102010063027
(43) Veröffentlichungstag der Anmeldung: 23.10.2013
(73) Patentinhaber: ZF Friedrichshafen AG, 88038 Friedrichshafen (DE)
(72) Erfinder: MIHATSCH, Georg, 88131 Lindau (DE); ARNOLD, Jörg, 88090 Immenstaad (DE); HERBETH, Valentine, 88045 Friedrichshafen (DE)
(86) Internationale Anmeldenummer: PCT/EP2011/069581
(87) Internationale Veröffentlichungsnummer: WO 2012/079847

(56) Entgegenhaltungen:
- EP-A2- 1 752 689
- DE-A1-102009 002 206

## Beschreibung

Die Erfindung betrifft ein Verfahren zum Betreiben einer Getriebevorrichtung eines Fahrzeugantriebsstranges bei Vorliegen einer Anforderung für einen Übersetzungswechsel gemäß der im Oberbegriff des Patentanspruches 1 näher definierten Art.

Aus der DE 10 2005 002 337 A1 ist eine als 8-Gang-Mehrstufengetriebe ausgeführte Getriebevorrichtung mit reibschlüssigen Schaltelementen, wie Lamellenkupplungen und Lamellenbremsen, bekannt. Bei Vorliegen einer Schaltanforderung für einen Übersetzungswechsel in der Getriebevorrichtung ist wenigstens ein reibschlüssiges Schaltelement, welches zur Darstellung der aktuell in der Getriebevorrichtung eingelegten Ist-Übersetzung in den Kraftfluss der Getriebevorrichtung zugeschaltet ist, aus dem Kraftfluss der Getriebevorrichtung abzuschalten, während wenigstens ein weiteres reibschlüssiges Schaltelement, welches während der Darstellung der aktuell in der Getriebevorrichtung eingelegten Ist-Übersetzung aus dem Kraftfluss der Getriebevorrichtung abgeschaltet ist, zur Darstellung der angeforderten Ist-Übersetzung in den Kraftfluss der Getriebevorrichtung zuzuschalten ist.

Dabei wird das über das zur Darstellung der aktuellen Ist-Übersetzung der Getriebevorrichtung in den Kraftfluss zugeschaltete reibschlüssige Schaltelement geführte Drehmoment mit zunehmender Schaltzeit mehr oder weniger von dem zur Darstellung der angeforderten Ziel-Übersetzungen in den Kraftfluss der Getriebevorrichtung zuzuschaltenden reibschlüssigen Schaltelement übertragen, während das über das abzuschaltende Schaltelement führbare Drehmoment abnimmt.

Nachteilhafterweise verursachen reibschlüssige Schaltelemente in geöffnetem Betriebszustand Schleppmomente, welche einen Gesamtwirkungsgrad eines Automatgetriebes in unerwünschtem Umfang beeinträchtigen.

Aus diesem Grund werden Getriebevorrichtungen, wie beispielsweise aus der DE 10 2008 000 429 A1 bekannt, in zunehmendem Umfang neben reibschlüssigen Schaltelementen auch mit formschlüssigen Schaltelementen ausgeführt, in deren Bereich keine den Gesamtwirkungsgrad einer Getriebevorrichtung beeinträchtigende Schleppmomente auftreten.

Ein Verfahren gemäß dem Oberbegriff des Anspruchs 1 ist aus der DE 10 2009 002 206 A1 bekannt.

Dabei ist jedoch zu berücksichtigen, dass formschlüssige Schaltelemente nur nahe ihres Synchronpunktes aus einem geöffneten Betriebszustand, in welchem kein Drehmoment über die formschlüssigen Schaltelemente führbar ist, in ihren geschlossenen Betriebszustand, in dem das gesamte anliegende Drehmoment über die formschlüssigen Schaltelemente führbar ist, umschaltbar sind. Zusätzlich sind in den Kraftfluss einer Getriebevorrichtung zugeschaltete formschlüssige Schaltelemente mit geringen Schaltkräften nur nahe ihres lastfreien Betriebszustandes aus dem Kraftfluss abschaltbar. Sowohl zum Synchronisieren von formschlüssigen Schaltelementen als auch zum Überführen formschlüssiger Schaltelemente in ihren lastfreien Zustand sind im Gegensatz zu reibschlüssigen Schaltelementen zusätzliche konstruktive Einrichtungen erforderlich, um Schaltungen in Getriebevorrichtungen, an welchen wenigstens ein formschlüssiges Schaltelement beteiligt ist, innerhalb gewünschter Schaltzeiten durchführen zu können.

Um mit den letztbeschriebenen Getriebevorrichtungen jeweils einen angeforderten Übersetzungswechsel ausgehend von einer Ist-Übersetzung in Richtung einer Ziel-Übersetzung, zu dessen Umsetzung ein formschlüssiges Schaltelement aus seinem geschlossenen Betriebszustand in seinen geöffneten Betriebszustand und gleichzeitig ein reibschlüssiges Schaltelement aus seinem geöffneten Betriebszustand in seinen geschlossenen Betriebszustand zu überführen ist, in gewünschtem Umfang mit einer hohen Schaltgüte bzw. einem hohen Schaltkomfort realisieren zu können, ist das abzuschaltende formschlüssige Schaltelement zum richtigen Zeitpunkt, d. h. innerhalb eines Betriebszustandsfensters, zu dem ein am formschlüssigen Schaltelement anliegendes Drehmoment im Wesentlichen wenigstens annähernd gleich Null ist, zu öffnen.

Wird das formschlüssige Schaltelement beispielsweise durch eine zu frühe oder zu späte Betätigung des formschlüssigen Schaltelementes geöffnet, besteht die Möglichkeit, dass zu einem vordefinierten Soll-Öffnungszeitpunkt am formschlüssigen Schaltelement zumindest ein Teil des über die Getriebevorrichtung geführten Drehmomentes am formschlüssigen Schaltelement anliegt und durch das Öffnen des formschlüssigen Schaltelementes in einem mit der Getriebevorrichtung ausgeführten Fahrzeugantriebsstrang ungewollte Antriebsstrangreaktionen durch den schlagartigen Abbau des am formschlüssigen Schaltelement anliegenden Drehmomentes entstehen, die in Form eines für einen Fahrer eines mit dem Fahrzeugantriebsstrang ausgeführten Fahrzeuges als unangenehm spürbarer Stoß wahrgenommen werden.

Darüber hinaus besteht bei einem zu späten Auslege- bzw. Trennversuch bei einer bereits zu hoch eingestellten Übertragungsfähigkeit des zuzuschaltenden reibschlüssigen Schaltelementes die Möglichkeit, dass das formschlüssige Schaltelement nur unter Aufbringung unerwünscht hoher Schaltkräfte in seinen geöffneten Betriebszustand überführbar ist, was aufgrund von Verspannungen im Bereich der Getriebevorrichtung verursachten hohen Reibkräften zwischen den miteinander in Eingriff stehenden Schaltelementhälften des zu öffnenden formschlüssigen Schaltelementes verursacht wird.

Wird das abzuschaltende formschlüssige Schaltelement nicht in gewünschtem Umfang in seinen geöffneten Betriebszustand überführt und gleichzeitig das zuzuschaltende reibschlüssige Schaltelement in Richtung seines geschlossenen Betriebszustandes betätigt, treten im Bereich einer Getriebevorrichtung unerwünschte Überbestimmungen auf, die unter Umständen dazu führen, dass ein abzuschaltendes formschlüssiges Schaltelement aufgrund eines zu schnellen oder fehlerhaften Aufbaus der Übertragungsfähigkeit im Bereich des zuzuschaltenden reibschlüssigen Schaltelementes ab einem definierten Zeitpunkt nicht mehr innerhalb vordefinierter Betriebszeiten in seinen geöffneten Betriebszustand überführbar ist.

Bei Getriebevorrichtungen die ausschließlich mit reibschlüssigen Schaltelementen ausgeführt sind, wird über eine softwaretechnische Auswertung der Ansteuerströme von elektrisch betreibbaren Aktoren einer elektrohydraulischen Betätigungseinrichtung sichergestellt, dass eine Überbestimmung eines Radsatzes vermieden wird. Bei entsprechender Auslegung der reibschlüssigen Schaltelemente, beispielsweise durch die reibschlüssigen Schaltelemente in Öffnungsrichtung jeweils mit einer Öffnungskraft beaufschlagenden Federeinrichtungen, kann davon ausgegangen werden, dass bei korrekter Ansteuerung der elektrisch betreibbaren Aktoren bzw. Druckregler die reibschlüssigen Schaltelemente im Falle einer Anforderung zum Öffnen auch tatsächlich aufgrund der Federvorbelastung in ihren geöffneten Betriebszustand überführt werden.

Dies ist bei formschlüssigen Schaltelementen aus den vorbeschriebenen Gründen nicht über den gesamten Betriebsbereich eines formschlüssigen Schaltelementes gewährleistet.

Der vorliegenden Erfindung liegt daher die Aufgabe zugrunde, ein Verfahren zum Betreiben einer Getriebevorrichtung eines Fahrzeugantriebstranges bei Vorliegen einer Anforderung für einen Übersetzungswechsel von einer Ist-Übersetzung in Richtung einer Ziel-Übersetzung mit mehreren reibschlüssigen Schaltelementen und mit wenigstens einem formschlüssigen Schaltelement zur Verfügung zu stellen, mittels welchem eine Überbestimmung eines Radsatzes verifizierbar ist und unerwünschte Verspannungszustände im Bereich einer Getriebevorrichtung sicher vermeidbar sind.

Erfindungsgemäß wird diese Aufgabe mit einem Verfahren mit den Merkmalen des Patentanspruches 1 gelöst.

Bei dem erfindungsgemäßen Verfahren zum Betreiben einer Getriebevorrichtung eines Fahrzeugantriebsstranges wird bei Vorliegen einer Anforderung für einen Übersetzungswechsel von einer Ist-Übersetzung in Richtung einer Ziel-Übersetzung mit mehreren reibschlüssigen Schaltelementen und mit wenigstens einem formschlüssigen Schaltelement, die zur Darstellung verschiedener Übersetzungen über eine elektrohydraulische Betätigungseinrichtung durch betätigungseinrichtungsseitiges Einstellen definierter Betätigungsströme elektrisch betreibbarer Aktoren, in deren Bereich hydraulische Betätigungsdrücke zum Betätigen der Schaltelemente vorgebbar sind, zu- oder abgeschaltet werden, wobei zur Durchführung des angeforderten Übersetzungswechsels das wenigstens eine formschlüssige Schaltelement abzuschalten ist und wenigstens eines der reibschlüssigen Schaltelemente zuzuschalten ist, und wobei ein zugeschalteter Betriebszustand der Schaltelemente jeweils bei Ermitteln eines Wertes eines betriebszustandsabhängigen Betätigungsstromes erkannt wird, zu dem das jeweilige Schaltelement in den zugeschalteten Betriebszustand überführt oder in diesem gehalten wird, werden während der Durchführung des angeforderten Übersetzungswechsels die Betätigungsströme aller Schaltelemente zur Ermittlung der aktuellen Betriebszustände der Schaltelemente bestimmt und zusätzlich wird der aktuelle Betriebszustand des abzuschaltenden formschlüssigen Schaltelementes über eine Sensoreinrichtung plausibilisiert. Bei Ermitteln eines zu einem geschlossenen Betriebszustand des zuzuschaltenden reibschlüssigen Schaltelementes äquivalenten Betätigungsstromes und eines zu einem geöffneten Betriebszustand des abzuschaltenden formschlüssigen Schaltelementes äquivalenten Betätigungsstromes wird bei gleichzeitiger Bestimmung eines geschlossenen Betriebszustandes des abzuschaltenden formschlüssigen Schaltelementes über die Sensoreinrichtung ein Fehlerfall erkannt. Bei Erkennen des Fehlerfalles über einen vordefinierten Prüfzeitraum wird ein oder werden mehrere ausgewählte Schaltelemente abgeschaltet und ein Kraftfluss im Bereich der Getriebevorrichtung unterbrochen oder es wird in der Getriebevorrichtung durch Abschalten des zuzuschaltenden reibschlüssigen Schaltelementes die Ist-Übersetzung eingelegt.

Die erfindungsgemäße Plausibilisierung nutzt zur Erkennung des Schaltzustandes und damit auch zur Verhinderung eines überbestimmten Radsatzes einer Getriebevorrichtung zum einen die aktuell vorliegenden Ansteuerströme und zusätzlich ein oder mehrere Signale einer Sensoreinrichtung, um sicher zu stellen, dass die Schaltelemente entsprechend der gewünschten Fahrposition und Fahrstufe korrekt angesteuert werden.

Wird das abzuschaltende formschlüssige Schaltelement trotz einer ordnungsgemäßen Betätigung bzw. Ansteuerung durch die elektrohydraulische Betätigungseinrichtung innerhalb des vordefinierten Prüfzeitraumes nicht in angefordertem Umfang in seinen geöffneten Betriebszustand überführt, wird eine Überbestimmung des Radsatzes der Getriebevorrichtung durch Unterbrechung des Kraftflusses im Bereich der Getriebevorrichtung vermieden. Alternativ hierzu werden Verspannungen im Bereich der Getriebevorrichtung bzw. wird eine Überbestimmung des Radsatzes der Getriebevorrichtung dadurch vermieden, dass entgegen der vorliegenden Anforderung für den Übersetzungswechsel von der Ist-Übersetzung in Richtung der Ziel-Übersetzung das zuzuschaltende reibschlüssige Schaltelement abgeschaltet und in der Getriebevorrichtung die Ist-Übersetzung eingelegt wird.

Bei einer weiteren vorteilhaften Variante des erfindungsgemäßen Verfahrens erfolgt die Plausibilisierung des Betriebszustandes des abzuschaltenden formschlüssigen Schaltelementes jeweils nach Ablauf eines Prüfteilzeitraumes, der vorzugsweise ein ganzzahliger Teil des Prüfzeitraumes ist. Dabei wird ein Fehlerspeicherwert nach jeder durchgeführten Plausibilisierung des Betriebszustandes des abzuschaltenden formschlüssigen Schaltelementes bei Erkennen des Fehlerfalles um einen Wert erhöht und ansonsten um den Wert verkleinert. Diese Variante ist durch eine hohe Robustheit gegenüber kurzfristig erkannten Verspannungszuständen im Bereich der Getriebevorrichtung gekennzeichnet, da eine kurzfristige Erkennung eines Verspannungszustandes nicht sofort zum Unterbrechen des Kraftflusses im Bereich der Getriebevorrichtung oder zum Einlegen der Ist-Übersetzung in der Getriebevorrichtung führt.

Der Kraftfluss wird bei einer weiteren vorteilhaften Variante des erfindungsgemäßen Verfahrens im Bereich der Getriebevorrichtung unterbrochen oder die Ist-Übersetzung wird in der Getriebevorrichtung durch Abschalten des zuzuschaltenden reibschlüssigen Schaltelementes eingelegt, wenn der im Fehlerspeicher hinterlegte Fehlerspeicherwert einen Schwellwert übersteigt.

Ist eine untere Grenze des Fehlerspeicherwertes gleich Null, wird der Fehlerspeicherwert bei Erkennen des Fehlerfalles jeweils ausgehend von einem definierten Grundwertniveau erhöht und der Kraftfluss im Bereich der Getriebevorrichtung unterbrochen oder die Ist-Übersetzung in der Getriebevorrichtung durch Abschalten des zuzuschaltenden reibschlüssigen Schaltelementes eingelegt, wenn der Fehlerfall über den vordefinierten Prüfzeitraum vorliegt.

Der aktuelle Betriebszustand wird bei einer weiteren mit geringem konstruktivem Aufwand durchführbaren Variante des erfindungsgemäßen Verfahrens über eine Positionssensoreinrichtung ermittelt, über die während der Öffnungsphase des formschlüssigen Schaltelementes, während der ein Formschluss zwischen zwei Schaltelementhälften des formschlüssigen Schaltelementes durch eine Relativbewegung in axialer Richtung zwischen den Schaltelementen aufgehoben wird, jeweils eine aktuelle axiale Position der Schaltelementhälften zueinander ermittelbar ist.

Bei dieser Variante ist der aktuelle Betriebszustand des abzuschaltenden formschlüssigen Schaltelementes während der Durchführung des angeforderten Übersetzungswechsels ausgehend von der Ist-Übersetzung in Richtung der Ziel-Übersetzung mit hoher Genauigkeit direkt im Bereich des formschlüssigen Schaltelementes zudem bauraum- und kostengünstig bestimmbar.

Ist dem formschlüssigen Schaltelement eine Drehmomentsensoreinrichtung zugeordnet, mittels der ein über das formschlüssige Schaltelement aktuell geführtes Drehmoment ermittelbar ist, wird bei einer weiteren vorteilhaften Variante des erfindungsgemäßen Verfahrens bei Vorliegen eines aktuell über das formschlüssige Schaltelement geführten Drehmomentes grösser als eine definierte Drehmomentschwelle der geschlossene Betriebszustand des formschlüssigen Schaltelementes mit geringem konstruktivem Aufwand bestimmt.

Ist dem formschlüssigen Schaltelement eine Drehzahlsensoreinrichtung zugeordnet, mittels der eine Differenzdrehzahl zwischen den Schaltelementhälften des formschlüssigen Schaltelementes ermittelbar ist, ist bei Vorliegen einer aktuellen Differenzdrehzahl kleiner als eine definierte Differenzdrehzahlschwelle der geschlossene Betriebszustand des formschlüssigen Schaltelementes auf kostengünstige Art und Weise bestimmbar, da Getriebevorrichtungen üblicherweise mit Drehzahlsensoreinrichtungen zur Bestimmung von Drehzahlen von Bauteilen ausgeführt sind.

Bei einer mit geringem konstruktivem Aufwand durchführbaren und kostengünstig in bestehende Getriebesysteme implementierbaren weiteren Variante des erfindungsgemäßen Verfahrens wird der geschlossene Betriebszustand des formschlüssigen Schaltelementes über eine Drehzahlsensoreinrichtung bestimmt, über die eine Getriebeeingangsdrehzahl und eine Getriebeausgangsdrehzahl ermittelbar ist, wobei der geschlossene Betriebszustand des formschlüssigen Schaltelementes bei Vorliegen eines Quotienten zwischen der Getriebeeingangsdrehzahl und der Getriebeausgangsdrehzahl ermittelt wird, der dem Wert der Ist-Übersetzung entspricht.

Bei einer weiteren vorteilhaften Variante des erfindungsgemäßen Verfahrens wird der aktuelle Betriebszustand des formschlüssigen Schaltelementes über eine Drucksensoreinrichtung ermittelt, über die jeweils ein zu einem geschlossenen Betriebszustand und zu einem geöffneten Betriebszustand des formschlüssigen Schaltelementes äquivalenter Druckwert des Betätigungsdruckes des formschlüssigen Schaltelementes bestimmbar ist.

Der aktuelle Betriebszustand des formschlüssigen Schaltelementes wird bei einer weiteren vorteilhaften Variante des erfindungsgemäßen Verfahrens über eine Sensoreinrichtung ermittelt, über die jeweils ein zu einem geschlossenen Betriebszustand und ein zu einem geöffneten Betriebszustand des formschlüssigen Schaltelementes äquivalenter Stromwert im Bereich des formschlüssigen Schaltelementes bestimmbar ist, wobei der Stromwert in geöffnetem Betriebszustand des formschlüssigen Schaltelementes einen ersten Grenzwert annimmt und mit zunehmendem Voranschluss in Richtung eines zweiten Grenzwertes variiert, der zu dem vollständig geschlossenen Betriebszustand des formschlüssigen Schaltelementes äquivalent ist.

Sowohl die in den Patentansprüchen angegebenen Merkmale als auch die in den nachfolgenden Ausführungsbeispielen des erfindungsgemäßen Gegenstandes angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen.

Es zeigt:
- Fig. 1: ein Radsatzschema einer Getriebevorrichtung;
- Fig. 2: eine tabellarische Schaltlogik der in Fig. 1 gezeigten Getriebevorrichtung; und
- Fig. 3: mehrere Verläufe verschiedener Betriebszustandsparameter der Getriebevorrichtung gemäß Fig. 1 bei Vorliegen einer Anforderung für einen Übersetzungswechsel, während der ein formschlüssiges Schaltelement abzuschalten und ein reibschlüssiges Schaltelement zuzuschalten ist.

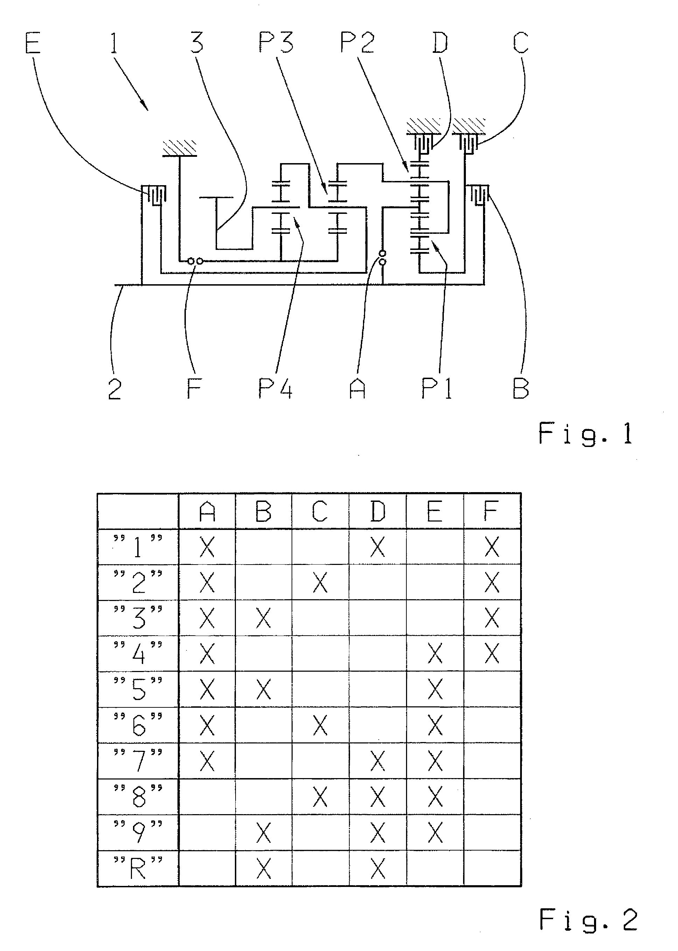

Fig. 1 zeigt ein Räderschema einer Getriebevorrichtung 1 bzw. eines Mehrstufengetriebes, welches grundsätzlich aus der DE 10 2008 000 429 A1 bekannt ist. Die Getriebevorrichtung 1 umfasst eine Antriebswelle 2 und eine Abtriebswelle 3, welche in einem im Fahrzeug montierten Zustand mit einem Abtrieb des Fahrzeugs verbunden ist, während die Antriebswelle 2 mit einer Antriebsmaschine wirkverbunden ist.

Darüber hinaus umfasst die Getriebevorrichtung 1 vier Planetenradsätze P1 bis P4, wobei der erste und der zweite Planetenradsatz P1, P2, die vorzugsweise als Minusplanetensätze ausgebildet sind, einen schaltbaren Vorschaltradsatz bilden, während der dritte und der vierte Planetenradsatz P3 und P4 den Hauptradsatz darstellen. Zusätzlich umfasst die Getriebevorrichtung 1 sechs Schaltelemente A bis F, wovon die Schaltelemente C, D und F als Bremsen und die Schaltelemente A, B und E als Schaltkupplungen ausgeführt sind.

Mit den Schaltelementen A bis F ist gemäß der in Fig. 2 näher dargestellten Schaltlogik ein selektives Schalten von neun Vorwärtsgängen "1" bis "9" und einem Rückwärtsgang "R" realisierbar, wobei zum Herstellen eines Kraftflusses in der Getriebevorrichtung 1 jeweils gleichzeitig drei Schaltelemente in einen geschlossenen Betriebszustand zu führen bzw. zu halten sind.

Die Schaltelemente A und F sind vorliegend als formschlüssige Schaltelemente ohne zusätzliche Synchronisierung ausgebildet, um im Betrieb der Getriebevorrichtung 1 im Vergleich zu Getriebevorrichtungen, die nur mit reibschlüssigen Schaltelementen ausgebildet sind, durch geöffnete reibschlüssige Schaltelemente verursachte Schleppmomente zu reduzieren. Da formschlüssige Schaltelemente im Allgemeinen nur innerhalb eines sehr schmalen Betriebszustandsfensters nahe ihres lastfreien Betriebszustandes aus einem geschlossenen Betriebszustand in einen geöffneten Betriebszustand überführbar sind, wird der lastfreie Betriebszustand eines abzuschaltenden formschlüssigen Schaltelementes ohne zusätzliche konstruktive Ausführungen durch entsprechende Betätigung der jeweils an der Schaltung beteiligten Schaltelemente realisiert. Dies gilt sowohl für Zug- als auch für Schubschaltungen, wobei die formschlüssigen Schaltelemente als Klauenkupplungen ausgeführt sein können, welche mit oder ohne zusätzliche Synchronisierung ausgebildet sind.

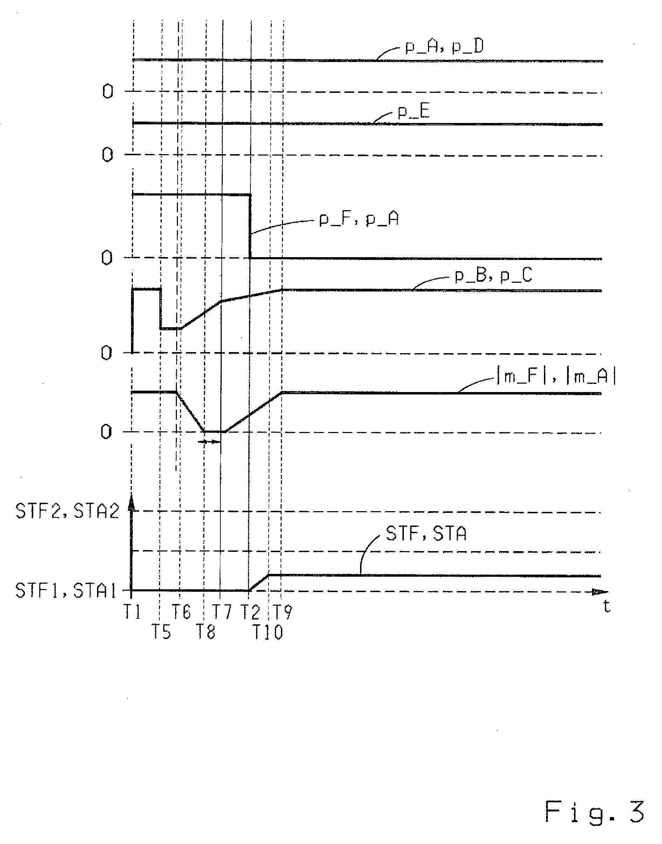

Die Wirkungsweise des erfindungsgemäßen Verfahrens wird anhand der in Fig. 3 über der Zeit t näher dargestellten Betriebszustandsverläufe mehrerer Betriebsparameter der Getriebevorrichtung 1 gemäß Fig. 1 näher erläutert. Das erfindungsgemäße Verfahren ist sowohl für die Überwachung und Betätigung des formschlüssigen Schaltelementes F während eines angeforderten Übersetzungswechsels ausgehend von der vierten Übersetzung "4" in Richtung der fünften Übersetzung "5", zu deren Durchführung das reibschlüssige Schaltelement B zuzuschalten ist und das formschlüssige Schaltelement F abzuschalten ist, als auch für die Überwachung und Betätigung des formschlüssigen Schaltelementes A bei einem angeforderten Übersetzungswechsel ausgehend von der siebten Übersetzung "7" in Richtung der achten Übersetzungsstufe "8" anwendbar, zu deren Durchführung das reibschlüssige Schaltelement C zuzuschalten ist und das formschlüssige Schaltelement A abzuschalten ist.

Zu einem Zeitpunkt T1 ist in der Getriebevorrichtung 1 die vierte Übersetzung "4" oder die siebte Übersetzung "7" für Vorwärtsfahrt eingelegt. Zum Zeitpunkt T1 ergeht eine Anforderung für einen Übersetzungswechsel ausgehend von der aktuell eingelegten Ist-Übersetzung "4" oder "7" in Richtung der fünften Übersetzung "5" oder der achten Übersetzung "8" für Vorwärtsfahrt bzw. der Ziel-Übersetzung, wobei hierfür das reibschlüssige Schaltelement B oder das Schaltelement C zu schließen ist und gleichzeitig das formschlüssige Schaltelement F oder das Schaltelement A aus seinem geschlossenen Betriebszustand in seinen geöffneten Betriebszustand zu überführen ist.

Ab dem Zeitpunkt T1 wird die Übertragungsfähigkeit des reibschlüssigen Schaltelementes B oder C durch entsprechendes Erhöhen des Betätigungsdruckes p_B oder p_C vergrößert. Hierfür wird der Betätigungsdruck p_B oder p_C ab dem Zeitpunkt T1 sprungartig auf ein Schnellfülldruckniveau angehoben und während einer bis zu einem Zeitpunkt T5 andauernden Schnellfüllphase auf diesem Druckniveau gehalten. Anschließend wird der Betätigungsdruck p_B bzw. p_C sprungartig auf ein Füllausgleichsdruckniveau geführt und während einer bis zu einem folgenden Zeitpunkt T6 andauernden Füllausgleichsphase auf diesem Druckniveau belassen, wobei das zuzuschaltende Schaltelement B oder C zum Zeitpunkt T6 einen Betriebszustand aufweist, zu dem die Übertragungsfähigkeit im Wesentlichen wenigstens annähernd gleich Null ist und von dem ausgehend eine Druckerhöhung einen sofortigen Anstieg der Übertragungsfähigkeit zur Folge hat. Wiederum anschließend wird der Betätigungsdruck p_B bzw. p_C des zuzuschaltenden Schaltelementes B oder C ab dem Zeitpunkt T6 über eine bis zu einem Zeitpunkt T7 andauernde Druckrampe auf ein Zwischendruckniveau geführt, womit die Übertragungsfähigkeit des zuzuschaltenden Schaltelementes B oder C angehoben wird und zunehmend Drehmoment über das zuzuschaltende reibschlüssige Schaltelement B oder C geführt wird.

Die vorbeschriebene Betätigung des zuzuschaltenden Schaltelementes B oder C führt wiederum dazu, dass das am abzuschaltenden formschlüssigen Schaltelement F oder A anliegende Drehmoment, dessen betragsmäßiger Verlauf |m_F| bzw. |m_A| in Fig. 3 gezeigt ist, kurz vor dem Zeitpunkt T6 reduziert wird und zu einem Zeitpunkt T8 wenigstens annähernd gleich Null ist, womit sich das abzuschaltende formschlüssige Schaltelement F oder A in einem für die Abschaltung erforderlichen Betriebszustandsbereich befindet.

Zu einem zeitlich auf den Zeitpunkt T8 folgenden weiteren Zeitpunkt T2 wird ein Betätigungsdruck p_F des formschlüssigen Schaltelementes F oder ein Betätigungsdruck p_A des formschlüssigen Schaltelementes A sprungartig von seinem Schließdruckniveau auf ein Öffnungsdruckniveau abgesenkt, um das formschlüssige Schaltelement F oder das formschlüssige Schaltelement A aus seinem geschlossenen Betriebszustand in seinen geöffneten Betriebszustand entsprechend der vorliegenden Anforderung für den Übersetzungswechsel bzw. die Hochschaltung ausgehend von der vierten Übersetzungsstufe "4" oder der siebten Übersetzung "7" in Richtung der fünften Übersetzungsstufe "5" oder der achten Übersetzung "8" umzusetzen. Das sprungartige Reduzieren des Betätigungsdruckes p_F oder p_A des formschlüssigen Schaltelementes F oder des Schaltelementes A stellt den Beginn einer Öffnungsphase des formschlüssigen Schaltelementes F oder des formschlüssigen Schaltelementes A dar, während welcher ein Formschluss zwischen den beiden Schaltelementhälften durch eine Relativbewegung in axialer Richtung zwischen den Schaltelementhälften aufzuheben ist.

Die zur Darstellung der aktuellen Getriebevorrichtung 1 eingelegten Ist-Übersetzung "4" ebenfalls zugeschalteten Schaltelemente A und E werden über den gesamten in Fig. 3 dargestellten Betriebszustandsverlauf mit Betätigungsdrücken p_A und p_E beaufschlagt, die das Schließdruckniveau der Schaltelemente A und E aufweisen. Entsprechend werden die zur Darstellung der siebten Übersetzungsstufe "7" in zugeschalteten Betriebszustand zu haltenden Schaltelemente D und E ebenfalls mit Betätigungsdrücken p_D und p_E auf dem Schließdruckniveau der Schaltelemente D und E über den gesamten Betriebszustandsverlauf beaufschlagt.

Die jeweils vorliegende aktuelle Stellung zwischen den beiden Schaltelementhälften des formschlüssigen Schaltelementes F oder des formschlüssigen Schaltelementes A wird über eine dem formschlüssigen Schaltelement F oder dem formschlüssigen Schaltelement A zugeordnete Positionssensoreinrichtung überwacht, über die jeweils eine aktuelle axiale Position der Schaltelementhälften zueinander bestimmbar ist.

Das Reduzieren des Betätigungsdruckes p_F bzw. p_A bewirkt das Verschieben einer der Schaltelementhälften des formschlüssigen Schaltelementes F oder A von der anderen nicht verschiebbar ausgeführten Schaltelementhälfte weg. Die aktuelle Position der verschiebbar ausgeführten Schaltelementhälfte des formschlüssigen Schaltelementes F oder A wird durch den in Fig. 3 gezeigten Verlauf STF oder STA grafisch wiedergegeben, wobei die verschiebbar ausgeführte Schaltelementhälfte des formschlüssigen Schaltelementes F oder A vor dem Zeitpunkt T2 sich in ihrer ersten Endstellung STF1 oder STA1 befindet, die zum vollständig geschlossenen Betriebszustand des formschlüssigen Schaltelementes F oder A äquivalent ist. Ab dem Zeitpunkt T2 wird die verschiebbar ausgeführte Schaltelementhälfte des formschlüssigen Schaltelementes F oder A aufgrund des reduzierten Betätigungsdruckes p_F oder p_A in Richtung ihres zweiten Endanschlages STF2 oder STA2 verschoben, der eine zu dem vollständig geöffneten Betriebszustand des formschlüssigen Schaltelementes F oder A äquivalente Stellung der verschiebbaren Schaltelementhälfte darstellt.

Die vorbeschriebene Betätigung der Schaltelemente A, B, E und F bzw. der Schaltelemente A, C, D und E bei Vorliegen der Anforderung für den Übersetzungswechsel von der Ist-Übersetzung "4" bzw. "7" in Richtung der Ziel-Übersetzung "5" bzw. "8" erfolgt über eine elektrohydraulische Betätigungseinrichtung durch betätigungseinrichtungsseitiges Einstellen definierter Betätigungsströme elektrisch betreibbarer Aktoren, in deren Bereich hydraulische Betätigungsdrücke zum Betätigen der Schaltelemente A bis F vorgebbar sind. Dabei wird generell ein zugeschalteter Betriebszustand der Schaltelemente A bis F jeweils bei Ermitteln eines Wertes eines betriebszustandsabhängigen Betätigungsstromes erkannt, zu dem das jeweilige Schaltelement A bis F in den zugeschalteten Betriebszustand überführt oder in diesem gehalten wird. Die Betätigungsströme werden in Abhängigkeit eines jeweils an der Antriebswelle 2 anliegenden Drehmomentes sowie in Abhängigkeit einer aktuellen Betriebstemperatur der Getriebevorrichtung 1 variiert, um die Schaltelemente A bis F innerhalb vordefinierter Betriebszeiten zu- oder abschalten zu können und die reibschlüssigen Schaltelemente B, C, D und E jeweils mit der für die Übertragung des aktuell an der Antriebswelle 2 anliegenden Drehmomentes erforderlichen Übertragungsfähigkeit zur Verfügung stellen zu können.

Um während der Durchführung des angeforderten Übersetzungswechsels eventuelle Verspannungszustände im Bereich der Getriebevorrichtung 1 ermitteln zu können, werden die Betätigungsströme aller Schaltelemente A bis F während der Durchführung des angeforderten Übersetzungswechsels ausgehend von der Ist-Übersetzung "4" oder "7" in Richtung der Ziel-Übersetzung "5" bzw. "8" zur Ermittlung der aktuellen Betriebszustände der Schaltelemente A bis F bestimmt. Zusätzlich wird der aktuelle Betriebszustand des abzuschaltenden formschlüssigen Schaltelementes F oder A über die dem formschlüssigen Schaltelement F oder A zugeordnete Positionssensoreinrichtung in der nachfolgend beispielhaft beschriebenen Art und Weise plausibilisiert.

Bei der in Fig. 3 gezeigten Betätigung des zuzuschaltenden reibschlüssigen Schaltelementes B oder C wird der Betätigungsdruck p_B oder p_C bereits zum Zeitpunkt T7 vom Zwischendruckniveau, zu dem das zuzuschaltende reibschlüssige Schaltelement B oder C bereits vorzugsweise in seinem schlupffreien Betriebszustand vorliegt, bis zu einem Zeitpunkt T9 auf das Schließdruckniveau angehoben, zu dem das zuzuschaltende reibschlüssige Schaltelement B oder C seine volle Übertagungsfähigkeit aufweist, zu dem das reibschlüssige Schaltelement B oder C vollständig zugeschaltet ist und zu dem prinzipiell das gesamte über die Getriebevorrichtung 1 zu führende Drehmoment im Bereich des reibschlüssigen Schaltelementes B oder C übertragbar ist.

Dies führt dazu, dass am abzuschaltenden formschlüssigen Schaltelement F oder A trotz der einwandfreien Betätigung des abzuschaltenden Schaltelementes F oder A ein den Abschaltvorgang beeinträchtigendes Drehmoment anliegt und in der Getriebevorrichtung 1 Verspannungszustände vorliegen, da der Formschluss im Bereich des abzuschaltenden formschlüssigen Schaltelementes F oder A zum Zeitpunkt T7 noch nicht getrennt ist. Diese Verspannungszustände behindern das Öffnen des abzuschaltenden formschlüssigen Schaltelementes F oder A derart, dass die verschiebbar ausgeführte Schaltelementhälfte des formschlüssigen Schaltelementes F oder A in der in Fig. 3 näher dargestellten Art und Weise ab dem Zeitpunkt T2 zunächst in Richtung seiner zweiten Endlage STF2 oder STA2 verschoben wird. Mit zunehmender Übertragungsfähigkeit steigt das im Bereich des abzuschaltenden formschlüssigen Schaltelementes F oder A wirkende Reibmoment zwischen den noch miteinander in Eingriff stehenden Schaltelementhälften in einem derartigen Umfang an, dass die Öffnungsbewegung zwischen den Schaltelementhälften des formschlüssigen Schaltelementes F oder A zu einem Zeitpunkt T10 zum Erliegen kommt, das formschlüssige Schaltelement F oder A nicht in seinen geöffneten Betriebszustand übergeht und aufgrund des zunehmenden Zuschaltzustandes des zuzuschaltenden reibschlüssigen Schaltelementes B oder C im Bereich der Getriebevorrichtung 1 eine Überbestimmung des Radsatzes vorliegt.

Um eine Überbestimmung des Radsatzes der Getriebevorrichtung 1 zu vermeiden, wird bei Ermitteln eines zu dem geschlossenen Betriebszustand des zuzuschaltenden reibschlüssigen Schaltelementes B oder C äquivalenten Betätigungsstromes und eines zu einem geöffneten Betriebszustand des abzuschaltenden formschlüssigen Schaltelementes F oder A äquivalenten Betätigungsstromes bei gleichzeitiger Bestimmung eines geschlossenen Betriebszustandes des abzuschaltenden formschlüssigen Schaltelementes F oder A über die Positionssensoreinrichtung ein Fehlerfall erkannt, wobei bei Erkennen des Fehlerfalles über einen vordefinierten Prüfzeitraum alle Schaltelemente A bis F durch entsprechendes Einstellen der Betätigungsströme abgeschaltet werden und der Kraftfluss im Bereich der Getriebevorrichtung 1 unterbrochen wird.

Die Plausibilisierung des Betriebszustandes des abzuschaltenden formschlüssigen Schaltelementes F oder A wird jeweils nach Ablauf eines Prüfteilzeitraumes, der vorzugsweise 10 bis 50 Millisekunden beträgt und ein ganzzahliger Teil des Prüfzeitraumes ist, der vorzugsweise 200 bis 300 Millisekunden beträgt, durchgeführt. Nach jeder durchgeführten Plausibilisierung des Betriebszustandes des abzuschaltenden formschlüssigen Schaltelementes F oder A wird bei Erkennen des Fehlerfalles ein Fehlerspeicherwert um einen definierten Wert erhöht und ansonsten um den Wert verkleinert. Der Kraftfluss im Bereich der Getriebevorrichtung 1 wird unterbrochen, wenn der im Fehlerspeicher hinterlegte Fehlerspeicherwert einen Schwellwert übersteigt.

Zusätzlich besteht auch die Möglichkeit, den aktuellen Betriebszustand des formschlüssigen Schaltelementes F oder A anstatt über eine Positionssensoreinrichtung oder zusätzlich zur Verwendung des Signals der Positionssensoreinrichtung über eine Drehzahlsensoreinrichtung zu ermitteln, über die eine Getriebeeingangsdrehzahl und eine Getriebeausgangsdrehzahl bestimmbar sind. Dabei wird der geschlossene Betriebszustand des abzuschaltenden formschlüssigen Schaltelementes F oder A bei Vorliegen eines Quotienten zwischen der Getriebeeingangsdrehzahl und der Getriebeausgangsdrehzahl ermittelt, der dem Wert der Ist-Übersetzung "4" oder "7" entspricht.

Wiederum in Abhängigkeit des jeweils vorliegenden Anwendungsfalles ist es bei einer weiteren Variante des erfindungsgemäßen Verfahrens vorgesehen, den aktuellen Betriebszustand des abzuschaltenden formschlüssigen Schaltelementes über eine dem formschlüssigen Schaltelement F oder A zugeordnete Drehmomentsensoreinrichtung zu ermitteln, mittels der ein über das formschlüssige Schaltelement F oder A aktuell geführtes Drehmoment bestimmbar ist. Dann wird der geschlossene Betriebszustand des formschlüssigen Schaltelementes F oder A bei Vorliegen eines aktuell über das formschlüssige Schaltelement F oder A geführten Drehmomentes größer als eine definierte Drehmomentschwelle ermittelt, die vorzugsweise größer Null ist.

Ist dem formschlüssigen Schaltelement F oder A eine Drehzahlsensoreinrichtung zugeordnet, mittels der eine Differenzdrehzahl zwischen den Schaltelementhälften des formschlüssigen Schaltelementes ermittelbar ist, wird der geschlossene Betriebszustand des formschlüssigen Schaltelementes bei Vorliegen einer aktuellen Differenzdrehzahl gleich Null bestimmt.

Grundsätzlich sind die vorbeschriebenen Varianten des erfindungsgemäßen Verfahrens auch zur Bestimmung eines geschlossenen Betriebszustandes von formschlüssigen Schaltelementen geeignet, bei welchen beide Schaltelementhälften verfahrbar ausgeführt sind.

### Bezugszeichen

- 1: Getriebevorrichtung
- 2: Antriebswelle
- 3: Abtriebswelle
- "1" bis "9": Übersetzung für Vorwärtsfahrt
- A bis F: Schaltelement
- |m_A|, |m_F|: Verlauf des am abzuschaltenden formschlüssigen Schaltelement A oder F anliegenden Drehmomentes
- p_A, p_B, p_C, p_D, p_F: Betätigungsdruck
- P1 bis P4: Planetenradsatz
- "R": Übersetzung für Rückwärtsfahrt
- STA, STF: Verlauf der Position der verschiebbar ausgeführten Schaltelementhälfte des formschlüssigen Schaltelementes A oder F
- STA1, STF1: erste Endstellung
- STA2, STF2: zweite Endstellung
- t: Zeit
- T1, T2: diskreter Zeitpunkt
- T5 bis T10: diskreter Zeitpunkt

## Patentansprüche

1. Verfahren zum Betreiben einer Getriebevorrichtung (1) eines Fahrzeugantriebsstranges bei Vorliegen einer Anforderung für einen Übersetzungswechsel von einer Ist-Übersetzung ("4" oder "7") in Richtung einer Ziel-Übersetzung ("5" oder "8")mit mehreren reibschlüssigen Schaltelementen (B, C, D, E) und mit wenigstens einem formschlüssigen Schaltelement (A, F), die zur Darstellung verschiedener Übersetzungen ("1" bis "R") über eine elektrohydraulische Betätigungseinrichtung durch betätigungseinrichtungsseitiges Einstellen definierter Betätigungsströme elektrisch betreibbarer Aktoren, in deren Bereich hydraulische Betätigungsdrücke (p_A, p_B, p_C, p_D, p_E, p_F) zum Betätigen der Schaltelemente (A bis F) vorgebbar sind, zu- oder abgeschaltet werden, wobei zur Durchführung des angeforderten Übersetzungswechsels das wenigstens eine formschlüssige Schaltelement (F oder A) abzuschalten ist und wenigstens eines der reibschlüssigen Schaltelemente (B oder C) zuzuschalten ist, und wobei ein zugeschalteter Betriebszustand der Schaltelemente (A bis F) jeweils bei Ermitteln eines Wertes eines betriebszustandsabhängigen Betätigungsstromes erkannt wird, zu dem das jeweilige Schaltelement (A bis F) in den zugeschalteten Betriebszustand überführt oder in diesem gehalten wird, **dadurch gekennzeichnet, dass** während der Durchführung des angeforderten Übersetzungswechsels die Betätigungsströme aller Schaltelemente (A bis F) zur Ermittlung der aktuellen Betriebszustände der Schaltelemente (A bis F) bestimmt werden und zusätzlich der aktuelle Betriebszustand des abzuschaltenden formschlüssigen Schaltelementes (F oder A) über eine Sensoreinrichtung plausibilisiert wird, wobei bei Ermitteln eines zu einem geschlossenen Betriebszustand des zuzuschaltenden reibschlüssigen Schaltelementes (B oder C) äquivalenten Betätigungsstromes und eines zu einem geöffneten Betriebszustand des abzuschaltenden formschlüssigen Schaltelementes (F oder A) äquivalenten Betätigungsstromes bei gleichzeitiger Bestimmung eines geschlossenen Betriebszustandes des abzuschaltenden formschlüssigen Schaltelementes (F oder A) über die Sensoreinrichtung ein Fehlerfall erkannt wird, und wobei bei Erkennen des Fehlerfalls über einen vordefinierten Prüfzeitraum ein oder mehrere ausgewählte Schaltelemente (A bis F) abgeschaltet und ein Kraftfluss im Bereich der Getriebevorrichtung (1) unterbrochen wird oder in der Getriebevorrichtung (1) durch Abschalten des zuzuschaltenden reibschlüssigen Schaltelementes (B oder C) die Ist-Übersetzung ("4" oder "7") eingelegt wird.

2. Verfahren nach Anspruch 1, **dadurch gekennzeichnet, dass** die Plausibilisierung des Betriebszustandes des abzuschaltenden formschlüssigen Schaltelementes (F oder A) jeweils nach Ablauf eines Prüfteilzeitraumes erfolgt, der vorzugsweise ein ganzzahliger Teil des Prüfzeitraumes ist, wobei ein Fehlerspeicherwert nach jeder durchgeführten Plausibilisierung des Betriebszustandes des abzuschaltenden formschlüssigen Schaltelementes (F oder A) bei Erkennen des Fehlerfalls um einen Wert erhöht und ansonsten um den Wert verkleinert wird.

3. Verfahren nach Anspruch 1 oder 2, **dadurch gekennzeichnet, dass** der Kraftfluss im Bereich der Getriebevorrichtung (1) unterbrochen wird oder die Ist-Übersetzung ("4" oder "7") in der Getriebevorrichtung (1) durch Abschalten des zuzuschaltenden reibschlüssigen Schaltelementes (B oder C) eingelegt wird, wenn der im Fehlerspeicher hinterlegte Fehlerspeicherwert einen Schwellwert übersteigt.

4. Verfahren nach Anspruch 3, **dadurch gekennzeichnet, dass** eine untere Grenze des Fehlerspeicherwerts gleich Null ist.

5. Verfahren nach einem der Ansprüche 1 bis 4, **dadurch gekennzeichnet, dass** der aktuelle Betriebszustand des abzuschaltenden formschlüssigen Schaltelementes (F oder A) über eine Positionssensoreinrichtung ermittelt wird, über die während der Öffnungsphase des formschlüssigen Schaltelementes (F oder A), während der zwischen zwei Schaltelementhälften des formschlüssigen Schaltelementes (F oder A) ein Formschluss durch eine Relativbewegung in axialer Richtung zwischen den Schaltelementhälften zu trennen ist, jeweils eine aktuelle axiale Position der Schaltelementhälften zueinander ermittelbar ist.

6. Verfahren nach einem der Ansprüche 1 bis 5, **dadurch gekennzeichnet, dass** dem formschlüssigen Schaltelement eine Drehmomentsensoreinrichtung zugeordnet ist, mittels der ein über das formschlüssige Schaltelement aktuell geführtes Drehmoment ermittelbar ist, wobei bei Vorliegen eines aktuell über das formschlüssige Schaltelement geführten Drehmomentes größer als eine definierte Drehmomentschwelle der geschlossene Betriebszustand des formschlüssigen Schaltelementes bestimmt wird.

7. Verfahren nach einem der Ansprüche 1 bis 6, **dadurch gekennzeichnet, dass** dem formschlüssigen Schaltelement eine Drehzahlsensoreinrichtung zugeordnet ist, mittels der eine Differenzdrehzahl zwischen den Schaltelementhälften des formschlüssigen Schaltelementes ermittelbar ist, wobei bei Vorliegen einer aktuellen Differenzdrehzahl kleiner als eine definierte Differenzdrehzahlschwelle der geschlossene Betriebszustand des formschlüssigen Schaltelementes bestimmt wird.

8. Verfahren nach einem der Ansprüche 1 bis 7, **dadurch gekennzeichnet, dass** der aktuelle Betriebszustand des abzuschaltenden formschlüssigen Schaltelementes über eine Drehzahlsensoreinrichtung bestimmt wird, über die eine Getriebeeingangsdrehzahl und eine Getriebeausgangsdrehzahl ermittelbar ist, wobei der geschlossene Betriebszustand des formschlüssigen Schaltelementes bei Vorliegen eines Quotienten zwischen der Getriebeeingangsdrehzahl und der Getriebeausgangsdrehzahl, der dem Wert der Ist-Übersetzung entspricht, ermittelt wird.

9. Verfahren nach einem der Ansprüche 1 bis 8, **dadurch gekennzeichnet, dass** der aktuelle Betriebszustand des formschlüssigen Schaltelementes über eine Drucksensoreinrichtung ermittelt wird, über die jeweils ein zu einem geschlossenen Betriebszustand und zu einem geöffneten Betriebszustand des formschlüssigen Schaltelementes äquivalenter Druckwert des Betätigungsdruckes des formschlüssigen Schaltelementes bestimmbar ist.

10. Verfahren nach einem der Ansprüche 1 bis 9, **dadurch gekennzeichnet, dass** der aktuelle Betriebszustand des formschlüssigen Schaltelementes über eine Sensoreinrichtung ermittelt wird, über die jeweils ein zu einem geschlossenen Betriebszustand und zu einem geöffneten Betriebszustand des formschlüssigen Schaltelementes äquivalenter Stromwert im Bereich des formschlüssigen Schaltelementes bestimmbar ist, wobei der Stromwert in geöffnetem Betriebszustand des formschlüssigen Schaltelementes einen ersten Grenzwert annimmt und mit zunehmendem Formschluss in Richtung eines zweiten Grenzwertes variiert, der zu dem vollständig geschlossenen Betriebszustand des formschlüssigen Schaltelementes äquivalent ist.

## Claims

1. Method for operating a transmission device (1) in a vehicle drive train when a request for a transmission ratio shift from an actual transmission ratio ("4" or "7") occurs in the direction of a target transmission ratio ("5" or "8") with a plurality of frictionally locking shift elements (B, C, D, E) with at least one positively locking shift element (A, F) which can be engaged or disengaged in order to form different transmission ratios ("1" to "R") by means of an electro-hydraulic activation device by an activation-device-side setting of defined activation currents of electrically operating actuators, in the region of which hydraulic activation pressures (p_A, p_B, p_C, p_D, p_E, p_F) for activating the shift elements (A to F) can be predefined, wherein in order to carry out the requested transmission ratio shift the at least one positively locking shift element (F or A) is to be disengaged and at least one of the frictionally locking shift elements (B or C) is to be engaged, and wherein an engaged operating state of the shift elements (A to F) is detected in each case when a value of an operating-state-dependent activation current is detected and to which the respective shift element (A to F) is transferred into the engaged operating state or is held therein, **characterized in that** during the execution of the requested transmission ratio shift the activation currents for all the shift elements (A to F) in order to detect the current operating states of the shift elements (A to F) are determined, and in addition the plausibility of the current operating state of the positively locking shift element (F or A) which is to be disengaged is checked by means of a sensor device, wherein when an activation current which is equivalent to a closed operating state of the frictionally locking shift element (B or C) which is to be engaged and an activation current which is equivalent to an opened operating state of the positively locking shift element (F or A) which is to be disengaged are ascertained and at the same time a closed operating state of the positively locking shift element (F or A) which is to be disengaged is determined by means of the sensor device a fault situation is detected, and when the fault situation is detected over a predefined test time period one or more selected shift elements (A to F) are disengaged and a force flux in the region of the transmission device (1) is interrupted or the actual transmission ratio ("4" or "7") is set in the transmission device (1) by disengaging the frictionally locking shift element (B or C) to be engaged.

2. Method according to Claim 1, **characterized in that** the checking of the plausibility of the operating state of the positively locking shift element (F or A) which is to be disengaged takes place in each case after the expiry of a test part time period which is preferably an integral part of the test time period, wherein a fault memory value is increased by a value when the fault situation is detected after execution of the plausibility checking of the operating state of the positively locking shift element (F or A) which is to be disengaged, and is otherwise reduced by the value.

3. Method according to Claim 1 or 2, **characterized in that** the force flux in the region of the transmission device (1) is interrupted or the actual transmission ratio ("4" or "7") in the transmission device (1) is set by disengaging the frictionally locking shift element (B or C) which is to be engaged, if the fault memory value which is stored in the fault memory exceeds a threshold value.

4. Method according to Claim 3, **characterized in that** a lower limit of the fault memory value is equal to zero.

5. Method according to one of Claims 1 to 4, **characterized in that** the current operating state of the positively locking shift element (F or A) which is to be disengaged is detected by means of a position sensor device by means of which in each case a current axial position of the shift element halves with respect to one another can be determined during the opening phase of the positively locking shift element (F or A), during which a positively locking engagement between two shift element halves of the positively locking shift element (F or A) can be released by a relative movement in the axial direction between the shift element halves.

6. Method according to one of Claims 1 to 5, **characterized in that** a torque sensor device, by means of which a torque which is currently conducted via the positively locking shift element can be detected, is assigned to the positively locking shift element, wherein the closed operating state of the positively locking shift element is determined when there is a torque conducted at that time via the positively locking shift element which is greater than a defined torque threshold.

7. Method according to one of Claims 1 to 6, **characterized in that** a rotational speed sensor device, by means of which a difference in rotational speed between the shift element halves of the positively locking shift element can be detected, is assigned to the positively locking shift element, wherein the closed operating state of the positively locking shift element is determined when there is a current difference in rotational speed which is less than a defined difference in rotational speed threshold.

8. Method according to one of Claims 1 to 7, **characterized in that** the current operating state of the positively locking shift element which is to be disengaged is determined by means of rotational speed sensor device by means of which a transmission input rotational speed and a transmission output rotational speed can be detected, wherein the closed operating state of the positively locking shift element is detected when there is a quotient between the transmission input rotational speed and the transmission output rotational speed which corresponds to the value of the actual transmission ratio.

9. Method according to one of Claims 1 to 8, **characterized in that** the current operating state of the positively locking shift element is detected by means of a pressure sensor device, by means of which in each case a pressure value of the activation pressure of the positively locking shift element which is equivalent to a closed operating state and to an opened operating state of the positively locking shift element can be determined.

10. Method according to one of Claims 1 to 9, **characterized in that** the current operating state of the positively locking shift element is detected by means of a sensor device, by means of which in each case a current value which is equivalent to a closed operating state and to an opened operating state of the positively locking shift element can be determined in the region of the positively locking shift element, wherein the current value in the opened operating state of the positively locking shift element assumes a first limiting value, and as the positively locking engagement increases it varies in the direction of a second limiting value which is equivalent to the completely closed operating state of the positively locking shift element.

## Revendications

1. Procédé permettant de faire fonctionner un dispositif de transmission (1) de chaîne cinématique de véhicule en présence d'une demande de changement de rapport d'un rapport réel (« 4 » ou « 7 ») en direction d'un rapport cible (« 5 » ou « 8 ») avec plusieurs éléments de changement de vitesse (B, C, D, E) réalisés par complémentarité de frottements et avec au moins un élément de changement de vitesse (A, F) réalisé par complémentarité de formes, lesdits éléments étant connectés ou déconnectés pour représenter les différents rapports (« 1 » à « R ») via un dispositif d'actionnement électrohydraulique, par réglage, du côté du dispositif d'actionnement, de courants d'actionnement définis d'actionneurs à entraînement électrique, des pressions d'actionnement (p_A, p_B, p_C, p_D, p_E, p_F) hydrauliques s'exerçant dans la région desdits actionneurs pouvant être prédéfinies pour actionner les éléments de changement de vitesse (A à F), sachant que pour réaliser les changements de rapport demandés, l'au moins un élément de changement de vitesse (F ou A) réalisé par complémentarité de formes doit être déconnecté et qu'au moins un des éléments de changement de vitesse (B ou C) réalisé par complémentarité de frottements doit être connecté et sachant qu'un état de fonctionnement connecté des éléments de changement de vitesse (A à F) est respectivement reconnu par détermination d'une valeur d'un courant d'actionnement dépendant de l'état de fonctionnement, ladite valeur correspondant à la valeur à laquelle l'élément de changement de vitesse (A à F) respectif est amené dans l'état de fonctionnement connecté ou maintenu dans celui-ci, **caractérisé en ce que** pendant la réalisation des changements de rapport demandés, les courants d'actionnement de tous les éléments de changement de vitesse (A à F) sont déterminés pour déterminer les états de fonctionnement actuels des éléments de changement de vitesse (A à F) et en outre que la plausibilité de l'état de fonctionnement actuel de l'élément de changement de vitesse (F ou A) réalisé par complémentarité de formes à déconnecter est vérifiée via un dispositif de détection, sachant que lors de la détermination d'un courant d'actionnement équivalent à un état de fonctionnement fermé d'un élément de changement de vitesse (B ou C) réalisé par complémentarité de frottements à connecter et d'un courant d'actionnement équivalent à un état de fonctionnement ouvert de l'élément de changement de vitesse (F ou A) réalisé par complémentarité de formes à déconnecter en cas de détermination simultanée d'un état de fonctionnement fermé de l'élément de changement de vitesse (F ou A) réalisé par complémentarité de formes à déconnecter via le dispositif de détection, un cas d'anomalie est détecté et sachant qu'en cas de détection du cas d'anomalie pendant une durée de contrôle prédéfinie, un ou plusieurs éléments de changement de vitesse (A à F) sélectionnés sont déconnectés et qu'un flux de puissance est interrompu dans la région du dispositif de transmission (1) ou que le rapport réel (« 4 » ou « 7 ») est passé dans le dispositif de transmission (1) par déconnexion de l'élément de changement de vitesse (B ou C) réalisé par complémentarité de frottements à connecter.

2. Procédé selon la revendication 1, **caractérisé en ce que** l'étude du caractère plausible de l'état de fonctionnement de l'élément de changement de vitesse (F ou A) réalisé par complémentarité de formes à déconnecter se produit respectivement après expiration d'une durée de contrôle qui est de préférence une partie à nombre entier de la durée de contrôle, une valeur de mémoire d'anomalie étant augmentée d'une valeur ou le cas échéant réduite de ladite valeur après étude du caractère plausible réalisée de l'état de fonctionnement de l'élément de changement de vitesse (F ou A) réalisé par complémentarité de formes à déconnecter en cas de détection du cas d'anomalie.

3. Procédé selon la revendication 1 ou 2, **caractérisé en ce que** le flux de puissance est interrompu dans la région du dispositif de transmission (1) ou que le rapport réel (« 4 » ou « 7 ») est passé dans le dispositif de transmission (1) par déconnexion de l'élément de changement de vitesse (B ou C) réalisé par complémentarité de frottements à connecter lorsque la valeur de mémoire d'anomalie mémorisée dans la mémoire d'anomalie dépasse une valeur seuil.

4. Procédé selon la revendication 3, **caractérisé en ce qu'**une limite inférieure de la valeur de mémoire d'anomalie est égale à zéro.

5. Procédé selon l'une quelconque des revendications 1 à 4, **caractérisé en ce que** l'état de fonctionnement actuel de l'élément de changement de vitesse (F ou A) réalisé par complémentarité de formes à déconnecter est déterminé via un dispositif de détection de position via lequel pendant la phase d'ouverture de l'élément de changement de vitesse (F ou A) réalisé par complémentarité de formes pendant laquelle, entre deux moitiés d'élément de changement de vitesse de l'élément de changement de vitesse (F ou A) réalisé par complémentarité de formes, une complémentarité de formes est séparée par un mouvement relatif dans la direction axiale réalisé entre les moitiés d'élément de changement de vitesse, une position axiale actuelle des moitiés d'élément de changement de vitesse l'une par rapport à l'autre peut respectivement être déterminée.

6. Procédé selon l'une quelconque des revendications 1 à 5, **caractérisé en ce qu'**un dispositif de détection de couple de rotation est associé à l'élément de changement de vitesse réalisé par complémentarité de formes, un couple de rotation actuellement transmis via l'élément de changement de vitesse réalisé par complémentarité de formes étant déterminé à l'aide dudit dispositif, sachant que l'état de fonctionnement fermé de l'élément de changement de vitesse réalisé par complémentarité de formes est déterminé en présence d'un couple de rotation actuellement transmis via l'élément de changement de vitesse réalisé par complémentarité de formes supérieur à un seuil de couple de rotation défini.

7. Procédé selon l'une quelconque des revendications 1 à 6, **caractérisé en ce qu'**un dispositif de détection de vitesse de rotation est associé à l'élément de changement de vitesse réalisé par complémentarité de formes, à l'aide duquel une différence de vitesse de rotation est déterminée entre les moitiés d'élément de changement de vitesse de l'élément de changement de vitesse réalisé par complémentarité de formes, sachant que l'état de fonctionnement fermé de l'élément de changement de vitesse réalisé par complémentarité de formes est défini en présence d'une différence de vitesse de rotation actuelle inférieure à un seuil de différence de vitesses de rotation défini.

8. Procédé selon l'une quelconque des revendications 1 à 7, **caractérisé en ce que** l'état de fonctionnement actuel de l'élément de changement de vitesse réalisé par complémentarité de formes à déconnecter est déterminé via un dispositif de détection de vitesse de rotation via lequel une vitesse de rotation d'entrée de transmission et une vitesse de rotation de sortie de transmission sont déterminées, l'état de fonctionnement fermé de l'élément de changement de vitesse réalisé par complémentarité de formes étant déterminé en présence d'un quotient existant entre la vitesse de rotation d'entrée de transmission et la vitesse de rotation de sortie de transmission correspondant à la valeur du rapport réel.

9. Procédé selon l'une quelconque des revendications 1 à 8, **caractérisé en ce que** l'état de fonctionnement actuel de l'élément de changement de vitesse réalisé par complémentarité de formes est déterminé via un dispositif de détection de pression via lequel respectivement une valeur de pression, équivalente à un état de fonctionnement fermé et à un état de fonctionnement ouvert de l'élément de changement de vitesse réalisé par complémentarité de formes, de la pression d'actionnement de l'élément de changement de vitesse réalisé par complémentarité de formes peut être déterminé.

10. Procédé selon l'une quelconque des revendications 1 à 9, **caractérisé en ce que** l'état de fonctionnement actuel de l'élément de changement de vitesse réalisé par complémentarité de formes est déterminé via un dispositif de détection via lequel respectivement une valeur de courant équivalente à un état de fonctionnement fermé et à un état de fonctionnement ouvert de l'élément de changement de vitesse réalisé par complémentarité de formes peut être déterminé dans la région de l'élément de changement de vitesse réalisé par complémentarité de formes, la valeur de courant prenant, à l'état de fonctionnement ouvert de l'élément de changement de vitesse réalisé par complémentarité de formes, une première valeur limite et variant avec une complémentarité de formes croissante en direction d'une deuxième valeur limite équivalente à l'état de fonctionnement entièrement fermé de l'élément de changement de vitesse réalisé par complémentarité de formes.
